# EUROPÄISCHE PATENTANMELDUNG

(11) **EP 4 593 226 A1**
(43) Veröffentlichungstag der Anmeldung: **30.07.2025**
(21) Anmeldenummer: 24153658.0
(22) Anmeldetag: 24.01.2024
(51) Int. Cl.: H02J 1/14, H02J 7/34, H02J 1/10

(54) **SYSTEM ZUR BEARBEITUNG VON WERKSTÜCKEN UND ENERGIEVERTEILUNGSVERFAHREN**

(71) Anmelder: Fronius International GmbH, 4643 Pettenbach (AT)
(72) Erfinder: STADLER, Manfred, 4643 Pettenbach (AT); FREISEISEN, Bernhard, 4643 Pettenbach (AT)
(74) Vertreter: SONN Patentanwälte GmbH & Co KG

(57) **Zusammenfassung**

System (1) zur Bearbeitung von Werkstücken (2), aufweisend:
- zumindest eine Energieerzeugungseinrichtung (3a, 3b) zur Erzeugung elektrischer Energie (E) und Einspeisung in ein lokales Energieversorgungsnetz (4) einer Produktionsanlage (5);
- zumindest ein erster elektrischer Energiespeicher (15);
- die Produktionsanlage (5) mit:
• einem Fügegerät (6a-c);
• einen zweiten elektrischen Energiespeicher (16);

- eine Berechnungseinrichtung (37) zur
• Bestimmung einer Menge an elektrischer Energie (E), die durch die Energieerzeugungseinrichtung (3a, 3b) in einem vorgegebenen Zeitraum (T) erzeugt wird;
• Bestimmung einer Menge an elektrischer Energie (Eₛ), die in dem vorgegebenen Zeitraum (T) in dem ersten (15) und/oder zweiten elektrischen Energiespeicher (16) zur Verfügung steht;
• Bestimmung eines Energiebedarfs (E_{B}) der Produktionsanlage (5);
• Erstellung und/oder Anpassung eines Zeitablaufs (40) zur Be- und Entladung der Energiespeichers (15, 16) und/ oder Anpassung eines Zeitablaufs (41) zur Bearbeitung der Werkstücke, sodass ein Anteil der durch die Energieerzeugungseinrichtung (3a-c) erzeugten Energie (E) an dem für die Bearbeitung der Werkstücke (2) benötigten Energiebedarf (E_{B}) eingestellt, vorzugsweise maximiert wird.

## Beschreibung

Die Erfindung betrifft ein System zur Bearbeitung von Werkstücken sowie ein Energieverteilungsverfahren zur zeitlichen Verteilung von elektrischer Energie bei einer Produktionsanlage.

Bei vielen modernen Produktionsanlagen zur Herstellung von Produkten oder Bearbeitung von Werkstücken sind die einzelnen Produktionsabläufe zeitlich sehr eng aufeinander abgestimmt, um dem Bedarf an zu produzierenden bzw. zu bearbeitenden Einheiten "just-in-Time" gerecht zu werden. Durch die zeitlich genaue Abstimmung der einzelnen Produktionsabläufe können Lagerkapazitäten geringgehalten und auch Redundanzen in den Produktionsanlagen vermieden werden. Der engen Abstimmung der Produktionsabläufe bzw. der Vermeidung von Redundanzen und Lagerkapazitäten gegenüber steht allerdings das immer wichtiger werdende Ziel, einen möglichst hohen Anteil der für die Herstellung der Produkte und Bearbeitung der Werkstücke erforderlichen elektrischen Energie durch erneuerbare elektrische Energie zu decken. Anders als elektrische Grundlastenergien, die einen relativen hohen Anteil an fossiler Energie enthalten können, unterliegen die meisten Arten von erneuerbaren elektrischen Energien jedoch teils beträchtlichen zeitlichen Schwankungen und sind nicht zu jeder Zeit und in unbegrenztem Maße abrufbar. Wenn erneuerbare elektrische Energie einen großen Teil beim Betrieb von Produktionsanlagen ausmachen soll, muss dies bei der Planung und Abstimmung der Produktionsabläufe berücksichtigt werden.

Um die beschriebenen, teilweise diametral gegenüberstehenden Anforderungen so weit wie möglich zu vereinen bzw. zu koordinieren, sind veränderte zeitliche Abstimmungen von Produktionsabläufen sowie Kompensationsmaßnahmen erforderlich. Veränderte zeitliche Abstimmungen sind erforderlich, um die zeitlichen und mengenmäßigen Schwankungen von erneuerbaren Energiequellen, insbesondere von Solar- und Windkraftanlagen, zu berücksichtigen. Kompensationsmaßnahmen sind erforderlich, um im Falle eines plötzlich auftretenden Überbedarfs oder Rückgangs an zur Verfügung stehender erneuerbarer elektrischer Energie die noch in Bearbeitung befindlichen Werkstücke fertigzustellen bzw. zumindest soweit zu bearbeiten, dass keine inakzeptablen Qualitätseinbußen entstehen. Dies ist insbesondere bei Fügeprozessen von Relevanz, da deren Unterbrechung und spätere Fortsetzung die Qualität der Fügestelle erheblich beeinflussen kann. Beispielsweise kann eine unterbrochene Schweißnaht nicht nur optisch negative Auswirkungen haben, sondern auch eine Schwachstelle im fertigen Produkt darstellen. In nuce ist es also erforderlich, die Nachteile, insbesondere die zeitlichen und mengenmäßigen Schwankungen, erneuerbarer Energiequellen und deren Auswirkungen auf die Produktionsabläufe einer Produktionsanlage zu berücksichtigen und zu kompensieren.

Aus US 2017/0297133 A1 ist ein Schweißsystem bekannt, das erneuerbare Energiequellen aufweist, mit denen eine Schweißstromquelle versorgt wird. Die erneuerbaren Energiequellen können beispielsweise durch eine Photovoltaikanlage oder ein Wasserkraftwerk gebildet werden.

WO 2019/152341 A1 offenbart ein Schweißsystem mit einem DC-Power Bus, einem Energiespeicher und einem bi-direktionalen Wandler.

Im Lichte dieser Ausführungen ist es Aufgabe der vorliegenden Erfindung, die Nachteile des Standes der Technik zumindest teilweise zu lindern oder gar gänzlich zu vermeiden. Vorzugsweise ist es Aufgabe der vorliegenden Erfindung, ein System und ein Energieverteilungsverfahren der eingangs erwähnten Art zur Verfügung zu stellen, bei denen Werkstücke mit einem möglichst hohen Anteil an einer bestimmten Art von elektrischer Energie, insbesondere erneuerbarer elektrischer Energie, bearbeitet werden können, ohne dass die Qualität der Werkstücke beeinträchtigt wird.

Gelöst wird diese Aufgabe durch ein System zur Bearbeitung von Werkstücken nach Anspruch 1 sowie durch ein Energieverteilungsverfahren nach Anspruch 6.

Ein System nach Anspruch 1 weist Folgendes auf:
- zumindest eine Energieerzeugungseinrichtung, beispielsweise eine Photovoltaik-, Windkraft oder Wasserkraftanlage, zur Erzeugung elektrischer Energie, vorzugsweise erneuerbarer elektrischer Energie, und direkten oder indirekten Einspeisung in ein lokales Energieversorgungsnetz, vorzugsweise ein DC-Energieversorgungsnetz, einer Produktionsanlage;
- zumindest ein erster elektrischer Energiespeicher zur zumindest teilweisen Zwischenspeicherung der durch die zumindest eine Energieerzeugungseinrichtung erzeugten elektrischen Energie, wobei der erste Energiespeicher mit dem lokalen Energieversorgungsnetz verbunden ist;
- die Produktionsanlage mit:
   - zumindest einem Fügegerät, beispielsweise einem Schweißgerät, zur Durchführung einer Vielzahl von Fügeprozessen, welches mit dem lokalen Energieversorgungsnetz verbunden ist;
   - zumindest einen zweiten elektrischen Energiespeicher, der mit dem Fügegerät und/oder dem lokalen Energieversorgungsnetz verbunden ist;
- eine Berechnungseinrichtung zur
   - Bestimmung einer Menge an elektrischer Energie, die durch die zumindest eine Energieerzeugungseinrichtung in einem vorgegebenen Zeitraum erzeugt wird, auf Basis gespeicherter gemessener, berechneter und/oder empirischer Daten;
   - Bestimmung einer Menge an elektrischer Energie, die in dem vorgegebenen Zeitraum in dem zumindest einen ersten und/oder zweiten elektrischen Energiespeicher zur Verfügung steht;
   - Bestimmung eines elektrischen Energiebedarfs der Produktionsanlage für die Bearbeitung von Werkstücken durch das zumindest eine Fügegerät auf Basis gespeicherter gemessener, berechneter und/oder empirischer Daten;
   - Erstellung und/oder Anpassung eines Zeitablaufs zur Be- und Entladung des ersten und/oder zweiten elektrischen Energiespeichers und/oder Anpassung eines Zeitablaufs zur Bearbeitung der Werkstücke durch das zumindest eine Fügegerät, sodass ein Anteil der durch die Energieerzeugungseinrichtung erzeugten elektrischen Energie an dem für die Bearbeitung der Werkstücke durch das zumindest eine Fügegerät benötigten Energiebedarf eingestellt, vorzugsweise maximiert, wird.

Vorteilhafterweise wird es durch das erfindungsgemäße System ermöglicht, den Anteil an einer bestimmten Art von elektrischer Energie, insbesondere erneuerbarer elektrischer Energie, bei der Bearbeitung von Werkstücken in einer Produktionsanlage zu erhöhen bzw. zu maximieren. Zu diesem Zweck werden die Menge an elektrischer Energie, die durch die zumindest eine Energieerzeugungseinrichtung in dem vorgegebenen Zeitraum erzeugt wird, die Menge an elektrischer Energie, die in dem vorgegebenen Zeitraum in dem zumindest einen ersten und/oder zweiten elektrischen Energiespeicher zur Verfügung steht, und der elektrische Energiebedarf der Produktionsanlage in dem vorgegebenen Zeitraum bestimmt und die Zeitabläufe und die Zeitpläne koordiniert, sodass der Anteil der durch die Energieerzeugungseinrichtung erzeugten elektrischen Energie an dem für die Bearbeitung der Werkstücke durch das zumindest eine Fügegerät benötigten Energiebedarf maximiert wird. Bevorzugt ist die zumindest eine Energieerzeugungseinrichtung eine erneuerbare Energiequelle, wie etwa eine Photovoltaikanlage oder eine Windkraftanlage. Wenn die Energieerzeugungseinrichtung in der Nähe der Produktionsanlage angeordnet ist, kann diese die erzeugte elektrische Energie vorzugsweise direkt in das lokale Energieversorgungsnetz einspeisen. Es ist aber auch möglich, dass die Energieerzeugungseinrichtung von der Produktionsanlage entfernt angeordnet ist und die erzeugte elektrische Energie indirekt, beispielsweise über ein oder mehrere zwischengeschaltete Netze, in das lokale Energieversorgungsnetz eingespeist wird. Vorzugsweise ist die Energieerzeugungseinrichtung als Photovoltaik-, Windkraft oder Wasserkraftanlage ausgebildet. Die Energieversorgungseinrichtung kann beispielsweise einen Umrichter, einen Wechselrichter, einen Spannungswandler und/oder einen Frequenzwandler aufweisen, um in das lokale oder in ein zwischengeschaltetes Energieversorgungsnetz mit der vorgegebenen Spannung einzuspeisen. Das lokale Energieversorgungsnetz versorgt Komponenten und Bestandteile, insbesondere Maschinen, Werkzeuge und Industrieroboter, der Produktionsanlage. Das lokale Energieversorgungsnetz ist vorzugsweise als DC-Energieversorgungsnetz (DC = engl. Direct Current, zu Deutsch: Gleichstrom) ausgebildet. Das lokale Energieversorgungsnetz kann an ein öffentliches Energieversorgungsnetz gekoppelt sein. Das Fügegerät wird durch das lokalen Energieversorgungsnetz mit elektrischer Energie versorgt. In einem Beispiel kann das lokale Energieversorgungsnetz eine Ausdehnung von zumindest 10 m aufweisen. Die Spannung im lokalen Energieversorgungsnetz kann beispielsweise zwischen 110 Volt AC (AC = engl. Alternating Current, zu Deutsch: Wechselstrom) und 600 Volt AC oder zwischen 12 Volt DC und 1500 Volt DC betragen. Der zumindest eine erste elektrische Energiespeicher ist mit dem lokalen Energieversorgungsnetz direkt oder indirekt verbunden. Wenn der erste Energiespeicher von dem lokalen Energieversorgungsnetz entfernt angeordnet ist, kann dieser beispielsweise indirekt über ein oder mehrere zwischengeschaltete Netze mit dem lokalen Energieversorgungsnetz verbunden sein. Alternativ kann der erste Energiespeicher auch direkt, d.h. ohne zwischengeschaltetes Energieversorgungsnetz, mit dem lokalen Energieversorgungsnetz verbunden sein. Der erste Energiespeicher kann beispielsweise einen Wechselrichter und/oder einen Spannungswandler aufweisen, um in das lokale oder in ein zwischengeschaltetes Energieversorgungsnetz mit der vorgegebenen Spannung einzuspeisen. Der erste Energiespeicher kann ein oder, insbesondere über das lokale Energieversorgungsnetz, mehrere Fügegeräte mit elektrischer Energie versorgen. Der erste Energiespeicher kann auch andere Maschinen, Werkzeuge und Industrieroboter mit elektrischer Energie versorgen. Der erste Energiespeicher kann beispielsweise ein elektrochemischer oder elektromechanischer Energiespeicher sein. Beispielsweise kann der erste Energiespeicher ein Akkumulator oder eine Brennstoffzelle sein. Der erste Energiespeicher ist zur Speicherung der von der Energieerzeugungseinrichtung erzeugten elektrischen Energie ausgebildet. Die Speicherkapazität des ersten Energiespeichers ist vorzugsweise abhängig vom Gesamtenergiebedarf der Produktionsanlage und/oder von der Größe der Energieerzeugungseinrichtung bzw. der Leistung der Energieerzeugungseinrichtung. Bevorzugt ist der erste Speicher ausgebildet mit einer Speicherkapazität von zumindest 50 kWh. Der erste Energiespeicher kann im Lichte dieser Offenbarung auch als statischer Energiespeicher bezeichnet werden, weil er große Energiemengen über einen längeren Zeitraum, beispielsweise mehr als 24 Stunden, speichern kann. Der erste Energiespeicher ist über das lokale Energieversorgungsnetz mit der Energieerzeugungseinrichtung verbunden. Bei der Produktionsanlage kann es sich um eine bearbeitende Produktionsanlage, die Werkstücke weiterverarbeitet, oder eine produzierende Produktionsanlage, die Werkstücke zu fertigen Produkten verarbeitet, handeln. Als Produktionsanlage im Sinne der Erfindung wird eine Gesamtheit an Maschinen, Werkzeugen und Einrichtungen bezeichnet, die zur Ausführung einer vorgesehenen Aufgabe, insbesondere der Herstellung von Produkten oder der Bearbeitung von unfertigen Produkten bzw. Halbzeugen, die auch als Werkstücke bezeichnet werden, gesehen. Die Produktionsanlage kann zumindest teilweise oder zur Gänze automatisiert sein. Die Produktionsanlage weist zumindest ein elektrisches Fügegerät, insbesondere ein Löt- oder ein Schweißgerät, auf, das über das lokale Energieversorgungsnetz mit elektrischer Energie versorgt wird. Im Falle eines Schweißgeräts kann dieses beispielsweise zum Lichtbogenschweißen, Widerstandspunktschwei-ßen, Laserschweißen und/oder Plasmaschweißen ausgebildet sein. Das lokale Energieversorgungsnetz kann auch mit einem öffentlichen Energieversorgungsnetz verbunden sein. Bei einer Ausführungsform der Erfindung weist die Produktionsanlage eine Mehrzahl an Fügegeräten auf, die alle über das lokale Energieversorgungsnetz versorgt werden. Mithilfe des zumindest einen Fügegeräts kann das Werkstück gemäß einer Vorgabe, beispielsweise der Vorgabe von Schweißparametern, bearbeitet werden. Vorzugsweise kann mit dem Fügegerät eine Fügenaht, insbesondere eine Schweißnaht, auf einem Werkstück erzeugt werden. Die Produktionsanlage weist des Weiteren noch zumindest einen zweiten Energiespeicher auf. Der zumindest eine zweite Energiespeicher kann bei einer bevorzugten Ausführungsform der Erfindung in das zumindest eine Fügegerät integriert sein. Der zweite Energiespeicher ist vorzugsweise dazu eingerichtet, den Fügeprozess durch Zurverfügungstellung von elektrischer Energie bei Bedarf zu stabilisieren. Der zweite Energiespeicher kann im Lichte dieser Offenbarung auch als dynamischer Energiespeicher bezeichnet werden, weil er im Vergleich zum ersten Energiespeicher kleinere Energiemengen speichern kann. Vorzugsweise sind der erste Energiespeicher und der zweite Energiespeicher getrennte Energiespeicher. Bei einer Ausführungsform der Erfindung können jedoch der erste und der zweite Energiespeicher durch einen gemeinsamen Energiespeicher gebildet sein, wobei der erste und der zweite Energiespeicher Untereinheiten des gemeinsamen Energiespeichers bilden. Das erfindungsgemäße System zur Bearbeitung von Werkstücken weist des Weiteren eine Berechnungseinrichtung auf. Die Berechnungseinrichtung ist dazu ausgebildet, eine Menge an elektrischer Energie, die durch die zumindest eine Energieerzeugungseinrichtung in einem vorgegebenen Zeitraum erzeugt wird, auf Basis gespeicherter gemessener, berechneter und/oder empirischer Daten zu bestimmen. Zu diesem Zweck kann in der Berechnungseinrichtung ein erstes mathematisches Modell hinterlegt sein. Dem ersten mathematischen Modell können beispielsweise Messdaten, insbesondere Messdaten über in die und/oder aus der Energieerzeugungseinrichtung fließende elektrische Ströme, ausgegebene elektrische Spannungen und/oder die sich daraus ergebenden elektrischen Leistungen oder Energiemengen, zur Verfügung gestellt werden. In das erste mathematische Modell können zusätzlich oder alternativ statistische Werte, insbesondere statistische Werte über in der Vergangenheit zu bestimmten Zeitpunkten oder in bestimmten Zeiträumen erzeugten Mengen an elektrischer Energie, einfließen. Zusätzlich oder alternativ können in das erste mathematische Modell berechnete Daten, wie beispielsweise aus anderen physikalischen Größen berechnete elektrische Größen, wie in die und/oder aus der Energieerzeugungseinrichtung fließende elektrische Ströme und ausgegebene elektrische Spannungen bzw. elektrische Leistungen und Energiemengen, einfließen. In das erste mathematische Modell können des Weiteren Prognosedaten, wie beispielsweise Wetterdaten oder Änderungen über geografische Gegebenheiten, die zum Beispiel zu einem erhöhten Lichteinfall oder mehr Winddurchsatz führen, einfließen, um künftige Mengen an elektrischer Energie präziser bestimmen zu können. Bei dem vorgegebenen Zeitraum kann es sich beispielsweise um einen Zeitraum von einer oder mehreren Millisekunden, einer oder mehreren Minuten, einer oder mehreren Stunden handeln oder einem oder mehreren Tagen handeln. Der vorgegebene Zeitraum kann zeitlich betrachtet zumindest teilweise oder gänzlich in der Zukunft liegen. In diesem Fall ist unter Bestimmung auch eine Schätzung oder Prognose der Menge an elektrischer Energie, die durch die Energieerzeugungseinrichtung erzeugt wird, zu verstehen. Die Berechnungseinrichtung ist weiters dazu eingerichtet, eine Menge an elektrischer Energie, die in dem vorgegebenen Zeitraum in dem zumindest einen ersten und/oder zweiten elektrischen Energiespeicher zur Verfügung steht, zu bestimmen. Zu diesem Zweck kann in der Berechnungseinrichtung ein zweites mathematisches Modell vorgesehen sein. In dem zweiten mathematischen Modell können beispielsweise die in den ersten und/oder zweiten Energiespeicher hinein- oder herausfließende elektrische Energie oder andere, damit verknüpfte elektrische Größen berücksichtigt werden. Die genannten elektrischen Größen können gemessen, berechnet oder empirisch, insbesondere statistisch mit Werten aus der Vergangenheit, bestimmt werden. In das zweite mathematische Modell können bei einer Ausführungsform der Erfindung auch die bestimmte Menge an erzeugter elektrischer Energie des ersten mathematischen Modells sowie der bestimmte elektrische Energiebedarf der Produktionsanlage einfließen. Wie bereits oben erwähnt, kann der vorgegebene Zeitraum zumindest teilweise in der Zukunft liegen. Die Bestimmung der Menge an elektrischer Energie in dem ersten und/oder zweiten elektrischen Energiespeicher ist in diesem Fall eine Schätzung bzw. Prognose. Die Berechnungseinrichtung ist auch dazu eingerichtet, einen elektrischen Energiebedarf der Produktionsanlage für die Bearbeitung von Werkstücken durch das zumindest eine Fügegerät auf Basis gespeicherter gemessener, berechneter und/oder empirischer Daten zu bestimmen. Zu diesem Zweck kann in der Berechnungseinrichtung ein drittes mathematisches Modell enthalten sein, mit dessen Hilfe der Energiebedarf bestimmt werden kann. In das dritte mathematische Modell können insbesondere Werkstück- und/ oder Fügeprozessdaten einfließen, um den Energiebedarf der Produktionsanlage hinsichtlich des zumindest einen Fügegeräts zu bestimmen. Bei den in das dritte mathematische Modell einfließenden Daten kann es sich beispielsweise um in einem Testlauf gemessene Daten, um empirische Daten, die anhand von gleichen oder ähnlichen Fügeprozessen ermittelt wurden, und/oder um berechnete Daten, die anhand des anzuwenden Fügeprozesses und/oder des zu bearbeitenden Werkstückes berechnet wurden, handeln. Bei der Bestimmung des Energiebedarfs kann insbesondere die Anzahl an zu bearbeitenden Werkstücken berücksichtigt werden. Bei der Bestimmung des Energiebedarfs kann es sich um eine Schätzung oder Prognose handeln, wenn der vorgegebene Zeitraum zumindest teilweise oder gänzlich in der Zukunft liegt. Das erste, zweite und dritte mathematische Modell können miteinander verknüpft sein oder jeweils Teilmodelle eines mathematischen Gesamtmodells darstellen. Ebenso gibt die Benennung "erstes", "zweites", "drittes" Modell nicht zwingend die Reihenfolgen an, in denen diese Modelle abgearbeitet bzw. eingesetzt werden. Die Modelle können in der Reihenfolge ihrer Benennung oder in einer beliebigen Reihenfolge oder auch parallel abgearbeitet bzw. eingesetzt werden. Die mathematischen Modelle bzw. das Gesamtmodell können beispielsweise Algorithmen beinhalten, die auf KI basieren. Die Berechnungseinrichtung kann durch eine einzige Einheit, wie ein Computer, Server oder Mikroprozessor, gebildet sein oder als verteiltes System mit mehreren Untereinheiten vorliegen. Die Untereinheiten können miteinander kommunizieren. Die Berechnungseinrichtung ist weiters dazu eingerichtet, einen Zeitablauf zur Be- und Entladung des ersten und/oder zweiten elektrischen Energiespeichers zu erstellen und/oder anzupassen und/oder einen Zeitablauf zur Bearbeitung der Werkstücke durch das zumindest eine Fügegerät anzupassen und/oder zu erstellen, sodass ein Anteil der durch die Energieerzeugungseinrichtung erzeugten elektrischen Energie an dem für die Bearbeitung der Werkstücke durch das zumindest eine Fügegerät benötigten Energiebedarf maximiert wird. Beispielsweise kann der Zeitablauf zur Bearbeitung der Werkstücke derart angepasst werden, dass die Werkstücke bearbeitet werden, wenn die Energieerzeugungseinrichtung ausreichend elektrische Energie erzeugt - insbesondere die Menge an erzeugter Energie den Energiebedarf übersteigt - bzw. zusätzlich oder alternativ ausreichend elektrische Energie, die von der Energieerzeugungseinrichtung erzeugt wurde, in dem ersten und/oder zweiten Energiespeicher bevorratet ist. Der Zeitplan zur Bearbeitung der Werkstücke kann beispielsweise auch derart angepasst werden, dass weniger Werkstücke pro Zeiteinheit bearbeitet werden, um die benötigte elektrische Leistung zu senken, wenn diese höher ist als die von der Energieerzeugungseinrichtung und/oder dem ersten Energiespeicher und/oder dem zweiten Energiespeicher zur Verfügung gestellte elektrische Leistung. Bei einer Ausführungsform der Erfindung wird der Zeitablauf zur Bearbeitung der Werkstücke derart geändert, dass die Werkstücke bearbeitet werden, wenn die Energieerzeugungseinrichtung eine Energiemenge pro Zeiteinheit zur Verfügung stellt, die über einem vorgegebenen Grenzwert liegt. Beispielsweise kann, wenn die Energieerzeugungseinrichtung eine Photovoltaikanlage ist, die Bearbeitung der Werkstücke, beispielsweise Werkstücke mit energieintensiven Fügeprozessen, stattfinden, wenn ausreichend Sonneneinstrahlung auf die Photovoltaikanlage eintrifft und damit ausreichend elektrische Leistung abrufbar ist. Wenn die Energieerzeugungseinrichtung eine Windkraftanlage ist, kann die Bearbeitung der Werkstücke beispielsweise stattfinden, wenn ausreichend Windenergie in elektrische Energie umgesetzt wird bzw. ausreichend elektrische Leistung abrufbar ist. Es kann aber auch vorgesehen sein, dass die von der Energieerzeugungseinrichtung erzeugte elektrische Energie in dem ersten und/oder zweiten Energiespeicher gespeicherte wird und die Werkstücke bearbeitet werden, wenn die Menge an gespeicherter elektrischer Energie einen Grenzwert überschreitet.

Bei einer bevorzugten Ausführungsform der Erfindung ist vorgesehen, dass der erste und/oder zweite elektrische Energiespeicher derart dimensioniert sind, dass im Falle einer elektrischen Unterversorgung durch das lokale Energieversorgungsnetz eine Mindestenergiemenge zur Verfügung gestellt wird, um einen bereits durch das zumindest eine Fügegerät begonnenen Fügeprozess unterbrechungsfrei abzuschließen. Insbesondere kann vorgesehen sein, dass der zweite Energiespeicher kurzeitige Schwankungen von Strom und/oder Spannung ausgleicht und dem zumindest einen Fügegerät im Falle einer Unterversorgung elektrische Energie zur Verfügung stellt, die zur Fertigstellung eines bereits begonnenen Fügeprozess abzuschließen. Vorzugsweise kann der zweite Energiespeicher benötigte Energie im Bereich von wenigen Millisekunden, zur Verfügung stellen. Ein von dem zweiten Energiespeicher zur Verfügung gestellter Strom kann beispielsweise eine Stromanstiegsgeschwindigkeit zwischen 500 A/ms und 1500 A/ms, beispielsweise von 1000 A/ms, aufweisen. Insbesondere kann es sich bei dem Fügeprozess um einen Schweißprozess handeln. Bei einer bevorzugten Ausführungsform ist der zweite Energiespeicher derart dimensioniert, dass eine begonnene Schweißnaht fertiggestellt werden kann. Bei dem zweiten Energiespeicher kann es sich beispielsweise um einen elektrochemischen Speicher oder einen kapazitiven Speicher handeln. Der zweite Energiespeicher hat beispielsweise eine Speicherkapazität von zumindest 400 Wh.

Eine besonders bevorzugte Ausführungsform ergibt sich, wenn der zweite Energiespeicher in dem zumindest einen Fügegerät integriert ist. Vorteilhafterweise kann dadurch benötigte Energie dem zumindest einen Fügegerät besonders rasch zur Verfügung gestellt werden. Bei einer Ausführungsform der Erfindung kann auch der erste Energiespeicher in das Fügegerät integriert sein.

Vorteilhaft ist, wenn der zweite Energiespeicher dazu eingerichtet ist
- eine für einen Fügeprozess notwendige Energie zur Einhaltung von vorgegebenen Prozessrahmenbedingungen zur Verfügung zu stellen und/oder
- von den Fügeprozessen rekuperierbare Energie einzuspeichern und/oder
- rekuperierbare Energie aus der Produktionsanlage, beispielsweise von Industrierobotern, einzuspeichern.

Die Prozessrahmenbedingungen eines Fügeprozesses werden durch Prozessparameter wie beispielsweise Stromanstiegs- und Stromabfallgeschwindigkeit definiert. Rekuperierbare Energie von Fügeprozessen kann beispielsweise aus kapazitiv oder elektromagnetisch angekoppelten Energiepfaden von beispielsweise Punktschweißanlagen gewonnen werden. Rekuperierbare Energie aus der Produktionsanlage ist beispielsweise eine generativ gewonnene elektrische Energie, die aus einer Bremsenergie eines Industrieroboters gewonnen wurde. Die rekuperierbare Energie kann über das lokale Energieversorgungsnetz in den zweiten Energiespeicher geladen werden.

Bei einer Ausführungsform der Erfindung kann vorgesehen sein, dass ein Verbindungsmodul, vorzugsweise ein DC/DC-Spannungswandler, mit dem ersten und dem zweiten Energiespeicher verbunden ist. Durch den DC/DC-Spannungswandler können Spannungsniveauunterschiede zwischen dem ersten und dem zweiten Energiespeicher ausgeglichen werden. Das Verbindungsmodul kann in einer Ausführungsform angeschlossene erste und/oder zweite Energiespeicher analysieren und/oder kalibrieren. Eine zwischen dem ersten und dem zweiten Energiespeicher dazwischengeschaltete galvanische Trennung ist nicht erforderlich. Diese Ausführungsform ist insbesondere vorteilhaft, wenn sowohl der erste als auch der zweite Energiespeicher in das zumindest eine Fügegerät integriert sind.

Die eingangs erwähnte Aufgabe wird auch durch ein Energieverteilungsverfahren nach Anspruch 6 gelöst. Das Energieverteilungsverfahren zur zeitlichen Verteilung von elektrischer Energie bei einer Produktionsanlage, wobei die Produktionsanlage zumindest ein Fügegerät zur Durchführung einer Vielzahl von Fügeprozessen an zu bearbeitenden Werkstücken aufweist, umfasst folgende Schritte:
i) Erzeugen elektrischer Energie, vorzugsweise erneuerbarer elektrischer Energie, durch eine Energieerzeugungseinrichtung, beispielsweise eine Photovoltaik-, Windkraft oder Wasserkraftanlage;
ii) Einspeisen der elektrischen Energie in ein lokales Energieversorgungsnetz, vorzugsweise ein DC-Energieversorgungsnetz, der Produktionsanlage und/oder in zumindest einen ersten und/ oder zweiten elektrischen Energiespeicher zur Zwischenspeicherung der elektrischen Energie;
iii) Bestimmen einer Menge an elektrischer Energie, die durch die zumindest eine Energieerzeugungseinrichtung in einem vorgegebenen Zeitraum erzeugt wird auf Basis gespeicherter gemessener, berechneter und/oder empirischer Daten;
iv) Bestimmen eines elektrischen Energiebedarfs der Produktionsanlage für die Bearbeitung von Werkstücken durch das zumindest eine Fügegerät auf Basis gespeicherter gemessener, berechneter und/oder empirischer Daten;
v) Bestimmen einer Menge an elektrischer Energie, die in dem vorgegebenen Zeitraum in dem zumindest einen ersten und/oder zweiten elektrischen Energiespeicher zur Verfügung steht, und
vi) Erstellen und/oder Anpassen eines Zeitablaufs zur Be- und Entladung des ersten und/oder zweiten elektrischen Energiespeichers und/oder Anpassen des Zeitablaufs zur Bearbeitung der Werkstücke durch das zumindest eine Fügegerät, sodass ein Anteil der durch die Energieerzeugungseinrichtung erzeugten elektrischen Energie an dem für die Bearbeitung der Werkstücke durch das zumindest eine Fügegerät benötigten Energiebedarf maximiert wird;
vii) Bearbeiten der Werkstücke durch das zumindest eine Fügegerät und/oder Be- und Entladen des ersten und/oder zweiten elektrischen Energiespeichers gemäß dem Zeitablauf, wobei das zumindest eine Fügegerät mit dem zweiten elektrischen Energiespeicher verbunden ist.

Die Vorteile, Effekte und weiteren Merkmale des Systems zur Bearbeitung von Werkstücken sind auf das Energieverteilungsverfahren übertragbar. Die Schritte können, aber müssen nicht in der angegebenen Reihenfolge durchgeführt werden. Die Schritte können nacheinander oder zumindest teilweise überlappend durchgeführt werden.

Bei einer bevorzugten Ausführungsform der Erfindung ist vorgesehen, dass der erste und/oder zweite Energiespeicher zumindest derart dimensioniert sind, dass im Falle einer elektrischen Unterversorgung durch das lokale Energieversorgungsnetz eine Mindestenergiemenge zur Verfügung gestellt wird, um einen bereits begonnen Fügeprozess unterbrechungsfrei abzuschließen. Auf diese Weise kann vermieden werden, dass Werkstücke defekte Fügenähte bzw. Qualitätsmängel aufweisen. Dadurch kann der Ausschuss verringert werden.

Bei einer besonders bevorzugten Ausführungsform ist vorgesehen, dass der Zeitablauf derart erstellt oder angepasst wird, dass die Werkstücke in einem Zeitabschnitt des vorgegebenen Zeitraums bearbeitet werden, in dem die Menge an elektrischer Energie, die durch die Energieerzeugungseinrichtung erzeugt wird und/oder durch die Energieerzeugungseinrichtung erzeugt worden ist, und in dem zumindest einen ersten und/oder zumindest einen zweiten elektrischen Energiespeicher zur Verfügung steht, den Energiebedarf der Produktionsanlage für die Bearbeitung der Werkstücke durch das zumindest eine Fügegerät deckt. Wenn die Energieerzeugungseinrichtung durch eine erneuerbare Energiequelle gebildet ist, kann auf diese Weise gesichert werden, dass die Werkstücke mit einem eingestellten, vorzugsweise maximal möglichen Anteil an erneuerbarer Energie, insbesondere ausschließlich mit erneuerbarer Energie, bearbeitet werden.

Um auch zu einem späteren Zeitpunkt einen hohen Anteil an elektrischer Energie durch erneuerbare elektrische Energie decken zu können, ist es günstig, wenn eine elektrische Überschussenergie, die von der Energieerzeugungseinrichtung zur Verfügung gestellt wird und die aktuell nicht zur Deckung des Energiebedarfs der Produktionsanlage benötigt wird, in dem zumindest einen ersten und/oder zumindest einen zweiten elektrischen Energiespeicher gespeichert wird und/oder gespeichert bleibt. Elektrische Überschussenergie ist die Differenz zwischen der Energiemenge, die von der Energieerzeugungseinrichtung zur Verfügung gestellt wird, und dem Energiebedarf der Produktionsanlage, insbesondere dem Energiebedarf des zumindest einen Fügegeräts, während einer Zeitspanne.

Die Energieeffizienz kann erhöht werden, wenn rekuperierte elektrische Energie, beispielsweise von einem Industrieroboter, in dem zumindest einen ersten und/oder zumindest einen zweiten elektrischen Energiespeicher gespeichert wird. Rekuperierte Energie kann über das lokale Energieversorgungsnetz in den ersten und/oder zweiten Energiespeicher geladen werden.

Bei einer Ausführungsform der Erfindung ist vorgesehen, dass die Energieerzeugungseinrichtung eine Photovoltaikanlage ist, die zumindest teilweise auf einem Dach einer Produktionshalle für die Produktionsanlage angeordnet ist. Es können auch weitere Energieerzeugungseinrichtungen vorgesehen sein, die direkt oder indirekt in das lokale Energieversorgungsnetz einspeisen. Diese weiteren Energieerzeugungseinrichtungen können ebenfalls Photovoltaikanlagen sein. Es kann aber auch vorgesehen sein, dass die weiteren Energieerzeugungseinrichtungen beispielsweise Wasserkraftwerke oder Windräder sind.

Bevorzugt ist, wenn bei der Bestimmung gemäß Schritt iii) Prognosedaten, beispielsweise Wetterdaten, herangezogen werden. Die Wetterdaten können insbesondere Wetterprognosedaten sein. Auf diese Weise kann die Genauigkeit der Bestimmung der Menge an elektrischer Energie, die durch die zumindest eine Energieerzeugungseinrichtung in einem zumindest teilweise künftigen vorgegebenen Zeitraum erzeugt wird, erhöht werden.

Bevorzugt ist, dass bei der Bestimmung gemäß Schritt iv) Prognosedaten, beispielsweise geplante Produktionsmengen, herangezogen werden.

Um die Bestimmung des elektrischen Energiebedarfs der Produktionsanlage für die Bearbeitung von Werkstücken zu verbessern und einen allfälligen Überbedarf besser kompensieren zu können, ist es günstig, wenn das zumindest eine Fügegerät Daten über die momentan verbrauchte Energie an die Berechnungseinrichtung sendet. Die Daten über die momentan verbrauchte Energie können in regelmäßigen Abständen an die Berechnungseinrichtung gesendet oder von der Berechnungseinrichtung abgefragt werden. Die Daten werden als Energie oder Leistungsdaten, beispielsweise als kWh oder kW, an die Berechnungseinrichtung gesendet.

Im Folgenden wird die Erfindung anhand von Figuren näher beschrieben, auf die sie jedoch nicht beschränkt sein soll. Es zeigen:
Fig. 1 ein Blockschaltbild eines Systems zur Bearbeitung von Werkstücken; und
Fig. 2 die Anpassung bzw. Erstellung von Zeitplänen.

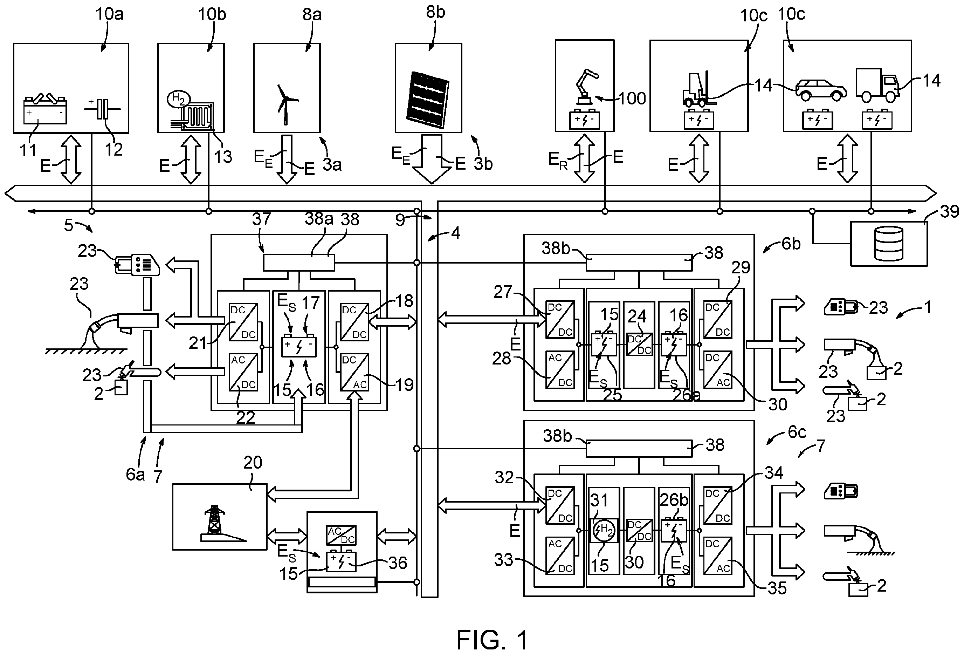

Fig. 1 zeigt schematisch ein Blockschaltbild eines Systems 1 zur Bearbeitung von Werkstücken 2. Das System 1 weist zwei Energieerzeugungseinrichtungen 3a, 3b auf, die elektrische Energie E, insbesondere erneuerbare elektrische Energie E_{E}, direkt oder indirekt über ein nicht eingezeichnetes dazwischengeschaltetes Energieversorgungsnetz in ein lokales Energieversorgungsnetz 4 einspeisen. Das lokale Energieversorgungsnetz 4 versorgt eine Produktionsanlage 5 zur Bearbeitung der Werkstücke 2 mit elektrischer Energie E. Die Produktionsanlage 5 weist in der gezeigten Darstellung mehrere Fügegeräte 6a-c in Form von Schweißgeräten 7 auf, die dazu eingerichtet sind, Schweißprozesse an den Werkstücken 2 auszuführen und dadurch zu bearbeiten.

Eine erste Energieerzeugungseinrichtung 3a wird durch eine Windkraftanlage 8a gebildet. Die Windkraftanlage 8a kann bei einer Ausführungsform der Erfindung direkt in das lokale Energieversorgungsnetz 4 einspeisen. Typischerweise sind Windkraftanlagen 8a jedoch an einem von der Produktionsanlage 5 entfernten Ort angeordnet und speisen die erzeugte elektrische Energie E indirekt über dazwischengeschaltete Energieversorgungsnetze der Mittel- oder Hochspannungsebene in das lokale Energieversorgungsnetz 4 ein. Eine zweite Energieerzeugungseinrichtung 3b wird durch eine Photovoltaikanlage 8b gebildet. Diese kann ebenfalls an einem entfernten Ort angeordnet sein oder sich zum Beispiel auf einem Dach einer Produktionshalle der Produktionsanlage 5 befinden. Weitere und/oder andere Energieversorgungseinrichtungen, beispielsweise Wasserkraftanlagen (nicht gezeigt), sind ebenso möglich.

Das lokale Energieversorgungsnetz 4 ist in der dargestellten Ausführungsform ein Gleichspannungsenergieversorgungsnetz bzw. DC-Energieversorgungsnetz 9, das beispielsweise mit einer Spannung von 400 V betrieben wird. An das lokale Energieversorgungsnetz 4 sind des Weiteren Speichereinheiten 10a, 10b direkt oder indirekt angeschlossen, die elektrische Energie E vom lokalen Energieversorgungsnetz 4 aufnehmen, zwischenspeichern und wieder in das lokale Energieversorgungsnetz 4 abgeben können. Eine erste Speichereinheit 10a wird durch einen Akkumulator 11 oder Speicherkondensator 12 gebildet. Eine zweite Speichereinheit 10b wird durch eine Brennstoffzelle 13 gebildet. Dritte Speichereinheiten 10c werden durch Fahrzeuge 14 mit Elektroantrieb gebildet.

Neben den Fügegeräten 6a-c werden auch ein oder mehrere Industrieroboter 100 von dem lokalen Energieversorgungsnetz versorgt. Die Industrieroboter 100 können elektrische Energie E aus dem lokalen Energieversorgungsnetz aufnehmen und generativ rückgewonnene Bremsenergie (rekuperierte Energie E_{R}) in das lokale Energieversorgungsnetz 4 rückspeisen.

Das System 1 weist zumindest einen ersten Energiespeicher 15 und zumindest einen zweiten Energiespeicher 16 auf. Der erste Energiespeicher 15 kann als statischer Energiespeicher bezeichnet werden und ist dazu eingerichtet, große Mengen an elektrischer Energie E, insbesondere elektrische Energie E, die von einer Energieerzeugungseinrichtung 3a, 3b erzeugt wurde, zu speichern und zu einem späteren Zeitpunkt zur Verfügung zu stellen. Der zumindest eine erste Energiespeicher 15 weist eine Speicherkapazität von zumindest 50 kWh auf. Vorzugsweise ist der erste elektrische Energiespeicher 15 dazu ausgebildet, zumindest einen Teil der Produktionsanlage 5 über einen Zeitraum von 24 Stunden mit gespeicherter elektrischer Energie E zu versorgen. Der zumindest eine erste Energiespeicher 15 kann in der Produktionsanlage 5 angeordnet sein. Alternativ kann der zumindest eine erste Energiespeicher 15 auch außerhalb der Produktionsanlage 5 angeordnet sein. Die Speichereinheiten 10a, 10b, 10c können in diesem Sinne auch als erste Energiespeicher 15 angesehen werden. Der zumindest eine zweite Energiespeicher 16 ist im Unterschied zu dem zumindest einen ersten Energiespeicher 15 dazu eingerichtet, kleine elektrische Mengen an elektrischer Energie E zu bevorraten, diese jedoch sehr rasch, vorzugsweise innerhalb von wenigen ms, zur Verfügung zu stellen, um dem Fügeprozess ausreichend dynamisch Energie zur Verfügung zu stellen. Deshalb kann der zweite Energiespeicher 16 auch als dynamischer Energiespeicher bezeichnet werden. Der zumindest eine zweite Energiespeicher 16 kann beispielsweise durch einen elektrochemischer oder kapazitiven-Speicher gebildet sein und eine Speicherkapazität zwischen 100 Wh und 1000 Wh aufweisen. Der erste 15 und der zweite Energiespeicher 16 stellen bevorzugt physikalisch getrennte Einheiten dar. Bei einer Ausführungsform können der erste 15 und der zweite Energiespeicher 16 jedoch durch einen gemeinsamen Energiespeicher 17 gebildet sein, wobei der erste 15 und der zweite Energiespeicher 16 jeweils Untereinheiten des gemeinsamen Energiespeichers 17 darstellen.

In der gezeigten Ausführungsform weist das System 1 drei Fügegeräte 6a, 6b, 6c auf. Im ersten Fügegerät 6a ist ein gemeinsamer Energiespeicher 17 vorgesehen, der sowohl den ersten 15, als auch den zweiten Energiespeicher 16 als Untereinheiten umfasst. Über einen bidirektionalen DC/DC-Wandler 18 ist der gemeinsame Energiespeicher 17 mit dem lokalen Energieversorgungsnetz 4 gekoppelt. Über einen AC/DC-Wandler 19 ist der gemeinsame Energiespeicher 17 mit einem öffentlichen Energieversorgungsnetz 20 gekoppelt. Über den DC/DC-Wandler 21 und/oder den DC/AC-Wandler 22 ist der gemeinsame Energiespeicher 17 mit einem oder mehreren Schweißbrenner 23 gekoppelt.

In dem zweiten Fügegerät 6b sind ein erster 15 und ein zweiter Energiespeicher 16 vorgesehen, die voneinander getrennt sind und über ein Verbindungsmodul, insbesondere einen DC/DC-Wandler 24, miteinander verbunden sind. Der DC/DC-Wandler 24 kann auch dazu ausgebildet sein, die angeschlossenen Energiespeicher 15, 16 zu analysieren und zu kalibrieren. Der erste Energiespeicher 15 ist ein Akkumulator 25. Der zweite Energiespeicher 16 ist ein Akkumulator 26a. Über einen bidirektionalen DC/DC-Wandler 27 ist der erste Energiespeicher 15 mit dem lokalen Energieversorgungsnetz 4 gekoppelt. Der zweite Energiespeicher 16 ist demnach indirekt über den DC/DC-Wandler 24, den ersten Energiespeicher 15 und dem DC/DC-Wandler 27 mit dem lokalen Energieversorgungsnetz 4 verbunden. Ein Laden des zweiten Energiespeichers 16 erfolgt demnach über den ersten Energiespeicher 15. Mithilfe eines AC/DC-Wandlers 28 kann der erste Energiespeicher 15 mit einem öffentlichen Energieversorgungsnetz 20 gekoppelt werden. Über den DC/ DC-Wandler 29 und/oder den DC/AC-Wandler 30 ist der zweite Energiespeicher 16 mit einem oder mehreren Schweißbrennern 23 gekoppelt.

In dem dritten Fügegerät 6c sind ein erster 15 und ein zweiter Energiespeicher 16 vorgesehen, die voneinander getrennt sind und über einen DC/DC-Wandler 30 miteinander verbunden sind. Der erste Energiespeicher 15 ist eine Brennstoffzelle 31. Der zweite Energiespeicher 16 ist ein Akkumulator 26b. Über einen bidirektionalen DC/DC-Wandler 32 ist der erste Energiespeicher 15 mit dem lokalen Energieversorgungsnetz 4 gekoppelt. Der zweite Energiespeicher 16 ist demnach indirekt über den DC/DC-Wandler 30, den ersten Energiespeicher 15 und dem DC/DC-Wandler 32 mit dem lokalen Energieversorgungsnetz 4 verbunden. Ein Laden des zweiten Energiespeichers 16 erfolgt demnach über den ersten Energiespeicher 15. Über einen AC/DC-Wandler 33 kann der erste Energiespeicher 15 mit einem öffentlichen Energieversorgungsnetz 20 gekoppelt werden. Über den DC/DC-Wandler 34 und den DC/AC-Wandler 35 ist der zweite Energiespeicher 16 mit einem Schweißbrenner 23 gekoppelt.

An das lokale Energieversorgungsnetz 4 ist weiters noch ein unabhängiger Energiespeicher 36 in Form eines weiteren ersten Energiespeichers 15 angeschlossen.

Das System 1 weist weiters eine Berechnungseinrichtung 37 auf, welche in Form eines verteilten Systems mit mehreren Untereinheiten 38, die miteinander kommunizieren, vorliegt. Die Untereinheiten 38 des verteilten Systems kommunizieren beispielsweise über eine drahtgebundene oder drahtlose Verbindung, beispielsweise mit 5G-Technologie, miteinander. Die Berechnungseinrichtung 37 besitzt einen Datenspeicher 39 zur Speicherung von unter anderem gemessenen und berechneten Daten.

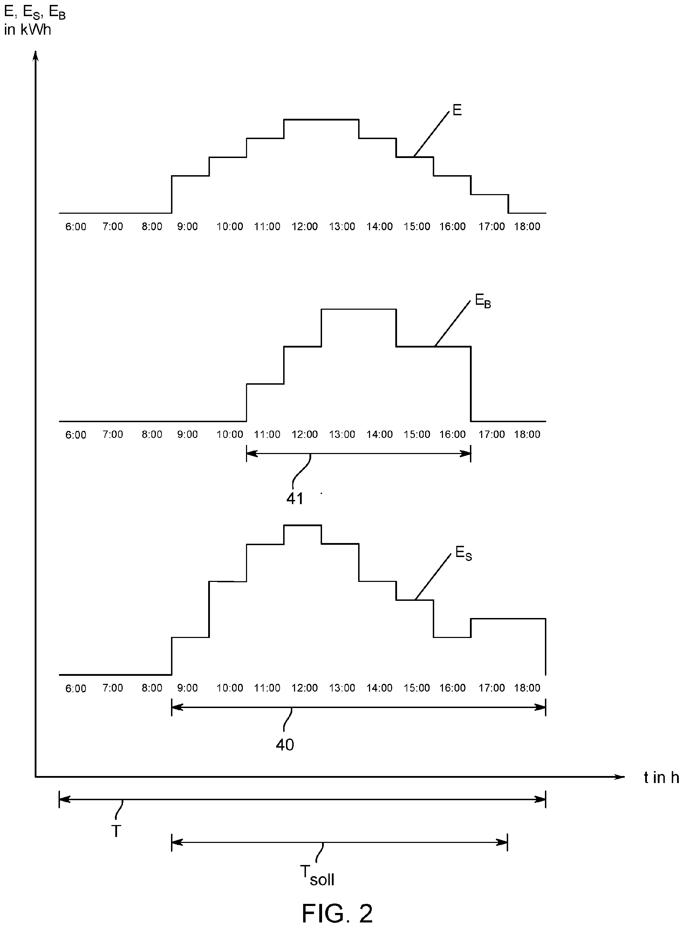

Die Berechnungseinrichtung 37 ist dazu eingerichtet, eine Menge an elektrischer Energie E, die durch die zumindest eine Energieerzeugungseinrichtung 3a, 3b in einem vorgegebenen Zeitraum T (siehe Fig. 2) erzeugt wird, zu bestimmen. Die Bestimmung der Menge an erzeugter Energie E kann insbesondere auf Basis gemessener, berechneter und/oder empirischer Daten erfolgen.

Des Weiteren ist die Berechnungseinrichtung 37 dazu eingerichtet, eine Menge an elektrischer Energie E_{S}, die in dem vorgegebenen Zeitraum T in den ersten 15 und/oder zweiten elektrischen Energiespeichern 16 zur Verfügung steht, zu bestimmen. Auch zu diesem Zweck können gemessene, berechnete und/oder empirische Daten herangezogen werden.

Die Berechnungseinrichtung 37 ist auch dazu ausgebildet, einen elektrischen Energiebedarf E_{B} (siehe Fig. 2) der Produktionsanlage 5 für die Bearbeitung von Werkstücken 2 durch das zumindest eine Fügegerät 6a-c auf Basis gespeicherter gemessener, berechneter und/oder empirischer Daten zu bestimmen.

Die Untereinheiten 38 sind in der gezeigten Darstellung in den Fügegeräten 6a-c integriert und vernetzt. Eine Untereinheit 38 kann als Master-Untereinheit 38a die übrigen Untereinheiten 38 als Slave-Untereinheiten 38b koordinieren. Für den Fall, dass die Master-Untereinheit 38a nicht zur Verfügung steht, beispielsweise defekt ist, kann eine Slave-Untereinheit 38b als Master-Untereinheit 38a neu bestimmt werden, beispielsweise unter Einsatz von KI-Algorithmen. Die Untereinheiten 38 stabilisieren einerseits das jeweilige Fügegerät 6a-c und den jeweiligen damit ausgeführten Fügeprozess durch die bedarfsweise Zurverfügungstellung von Energie aus dem ersten und/oder zweiten Energiespeicher 16 des entsprechenden Fügegeräts 6a-c. Die Untereinheiten 38 stabilisieren auch das System 1, insbesondere den Teil innerhalb der Produktionsanlage 5, durch Zurverfügungstellung von Energie aus den ersten Energiespeichern 15. Die Koordination erfolgt dabei durch die Master-Untereinheit 38a.

Um einen Anteil der durch die Energieerzeugungseinrichtung 3 erzeugten elektrischen Energie E an dem für die Bearbeitung der Werkstücke durch das zumindest eine Fügegerät 6a-c benötigten Energiebedarf E_{B} zu maximieren, wird ein Zeitablauf 40 zur Be- und Entladung der ersten 15 und/oder zweiten elektrischen Energiespeicher 16 erstellt bzw. angepasst. Des Weiteren wird ein Zeitablauf 41 zur Bearbeitung der Werkstücke 2 durch das zumindest eine Fügegerät 6a-c erstellt bzw. angepasst. Dies ist vereinfacht und schematisch in Fig. 2 dargestellt.

In Fig. 2 ist ein Zeitraum T von 12 Stunden zwischen 6:00 Uhr und 18:00 Uhr dargestellt. Die Abszisse beschreibt die Zeit in Stunden. Die Ordinate beschreibt die Energien E, E_{S} und E_{B} in kWh. Dargestellt ist in Fig. 2 eine mittels der Berechnungseinrichtung 37 ermittelte Menge an elektrischer Energie E, die durch die zumindest eine Energieerzeugungseinrichtung 3a, 3b in einem vorgegebenen Zeitraum T (stündlich) erzeugt wird, als zeitlicher Verlauf. Zu erkennen ist, dass ab ca. 8:00 Uhr die erzeugte Energie E zunimmt, was beispielsweise auf eine erhöhte Sonneneinstrahlung oder verstärkten Windgang zurückzuführen sein kann. Ebenfalls dargestellt ist ein mittels der Berechnungseinrichtung 37 bestimmter elektrischer Energiebedarf E_{B} der Produktionsanlage 5 für die Bearbeitung einer vorgegebenen Anzahl an Werkstücken 2. Der Energiebedarf E_{B} steigt zu Beginn an, weil es sich im vorliegenden Beispiel um eine serielle Fertigung handelt, die erst hochgefahren werden muss. Um den Anteil an Energie E, die durch die zumindest eine Energieerzeugungseinrichtung 3a, 3b in einem vorgegebenen Zeitraum T erzeugt wird, an dem Energiebedarf E_{B} zu maximieren, sodass keine oder nur sehr wenig Grundlastenergie aus dem öffentlichen Netz 20 entnommen werden muss, werden die Werkstücke 2 gemäß dem Zeitablauf 41 in einem Zeitabschnitt Tₛₒₗₗ innerhalb des Zeitraums T bearbeitet, in dem vorzugsweise ausreichend Energie E der Energieerzeugungseinrichtung 3a, 3b zur Verfügung steht. Um ausreichend Energie zur Verfügung stellen zu können und Schwankungen ausgleichen zu können, wird auch ein Zeitablauf 40 zur Be- und Entladung der ersten 15 und/oder zweiten elektrischen Energiespeicher 16 angepasst, sodass diese vor Beginn der Bearbeitung der Werkstücke 2zumindest teilweise geladen sind. Mit den geladenen Energiespeichern 15, 16 können einerseits Schwankungen ausgeglichen werden und andererseits, im Falle eines unerwarteten Rückgangs an Energie E bzw. eines Überbedarfs, bereits begonnene Fügeprozess unterbrechungsfrei abgeschlossen werden, um Defekte oder Qualitätsmängel an den Werkstücken zu vermeiden. Zudem können in dem Energiespeichern 15 nicht benötigte bzw. überschüssige Energie E der Energieerzeugungseinrichtung 3a, 3b gespeichert werden (siehe die Energie E_{S} ab 16:00).

## Patentansprüche

1. System (1) zur Bearbeitung von Werkstücken (2), aufweisend:
- zumindest eine Energieerzeugungseinrichtung (3a, 3b), beispielsweise eine Photovoltaik- (8b), Windkraft- (8a) oder Wasserkraftanlage, zur Erzeugung elektrischer Energie (E), vorzugsweise erneuerbarer elektrischer Energie (E_{E}), und direkten oder indirekten Einspeisung in ein lokales Energieversorgungsnetz (4), vorzugsweise ein DC-Energieversorgungsnetz (9), einer Produktionsanlage (5);
- zumindest ein erster elektrischer Energiespeicher (15) zur zumindest teilweisen Zwischenspeicherung der durch die zumindest eine Energieerzeugungseinrichtung (3a, 3b) erzeugten elektrischen Energie (E), wobei der erste Energiespeicher (15) mit dem lokalen Energieversorgungsnetz (4) verbunden ist;
- die Produktionsanlage (5) mit:
• zumindest einem Fügegerät (6a-c), beispielsweise einem Schweißgerät, zur Durchführung einer Vielzahl von Fügeprozessen, welches mit dem lokalen Energieversorgungsnetz (4) verbunden ist;
• zumindest einen zweiten elektrischen Energiespeicher (16), der mit dem Fügegerät (6a-c) und/oder dem lokalen Energieversorgungsnetz (4) verbunden ist;
- eine Berechnungseinrichtung (37) zur
• Bestimmung einer Menge an elektrischer Energie (E), die durch die zumindest eine Energieerzeugungseinrichtung (3a, 3b) in einem vorgegebenen Zeitraum (T) erzeugt wird, auf Basis gespeicherter gemessener, berechneter und/oder empirischer Daten;
• Bestimmung einer Menge an elektrischer Energie (E_{S}), die in dem vorgegebenen Zeitraum (T) in dem zumindest einen ersten (15) und/oder zweiten elektrischen Energiespeicher (16) zur Verfügung steht;
• Bestimmung eines elektrischen Energiebedarfs (E_{B}) der Produktionsanlage (5) für die Bearbeitung von Werkstücken (2) durch das zumindest eine Fügegerät (6a-c) auf Basis gespeicherter gemessener, berechneter und/oder empirischer Daten;
• Erstellung und/oder Anpassung eines Zeitablaufs (40) zur Be- und Entladung des ersten (15) und/oder zweiten elektrischen Energiespeichers (16) und/oder Anpassung eines Zeitablaufs (41) zur Bearbeitung der Werkstücke durch das zumindest eine Fügegerät (6a-c), sodass ein Anteil der durch die Energieerzeugungseinrichtung (3a-c) erzeugten elektrischen Energie (E) an dem für die Bearbeitung der Werkstücke (2) durch das zumindest eine Fügegerät (6a-c) benötigten Energiebedarf (E_{B}) eingestellt, vorzugsweise maximiert, wird.

2. System (1) nach Anspruch 1, **dadurch gekennzeichnet, dass** der erste (15) und zweite elektrische Energiespeicher (16) derart dimensioniert sind, dass im Falle einer elektrischen Unterversorgung durch das lokale Energieversorgungsnetz (4) eine Mindestenergiemenge an elektrischer Energie zur Verfügung gestellt wird, um einen bereits durch das zumindest eine Fügegerät (6a-c) begonnenen Fügeprozess unterbrechungsfrei abzuschließen.

3. System (1) nach Anspruch 1 oder 2, **dadurch gekennzeichnet, dass** der zweite Energiespeicher (16) in dem zumindest einen Fügegerät (6a-c) integriert ist.

4. System (1) nach einem der Ansprüche 1 bis 3, **dadurch gekennzeichnet, dass** der zweite Energiespeicher (16) dazu eingerichtet ist,
• eine für einen Fügeprozess notwendige Energie zur Einhaltung von vorgegebenen Prozessrahmenbedingungen zur Verfügung zu stellen und/oder
• von den Fügeprozessen rekuperierbare Energie einzuspeichern und/oder
• rekuperierbare Energie aus der Produktionsanlage, beispielsweise von Industrierobotern, einzuspeichern.

5. System (1) nach einem der Ansprüche 1 bis 4, **dadurch gekennzeichnet, dass** ein Verbindungsmodul, vorzugsweise ein DC/DC-Spannungswandler (24, 30), mit dem ersten (15) und dem zweiten Energiespeicher (16) verbunden ist.

6. Energieverteilungsverfahren zur zeitlichen Verteilung von elektrischer Energie (E) bei einer Produktionsanlage (5), wobei die Produktionsanlage (5) zumindest ein Fügegerät (6a-c) zur Durchführung einer Vielzahl von Fügeprozessen an zu bearbeitenden Werkstücken (2) aufweist und das Energieverteilungsverfahren folgende Schritte umfasst:
i) Erzeugen elektrischer Energie (E), vorzugsweise erneuerbarer elektrischer Energie (E_{E}), durch eine Energieerzeugungseinrichtung, beispielsweise eine Photovoltaik- (8b), Windkraft-(8a) oder Wasserkraftanlage;
ii) Einspeisen der elektrischen Energie (E) in ein lokales Energieversorgungsnetz (4), vorzugsweise ein DC-Energieversorgungsnetz (9), der Produktionsanlage (5) und/oder in zumindest einen ersten (15) und/oder zweiten elektrischen Energiespeicher (16) zur Zwischenspeicherung der elektrischen Energie (E);
iii) Bestimmen einer Menge an elektrischer Energie (E), die durch die zumindest eine Energieerzeugungseinrichtung (3a, 3b) in einem vorgegebenen Zeitraum (T) erzeugt wird auf Basis gespeicherter gemessener, berechneter und/oder empirischer Daten;
iv) Bestimmen eines elektrischen Energiebedarfs (E_{B}) der Produktionsanlage (5) für die Bearbeitung von Werkstücken (2) durch das zumindest eine Fügegerät (6a-c) auf Basis gespeicherter gemessener, berechneter und/oder empirischer Daten;
v) Bestimmen einer Menge an elektrischer Energie (E_{S}), die in dem vorgegebenen Zeitraum (T) in dem zumindest einen ersten (15) und/oder zweiten elektrischen Energiespeicher (16) zur Verfügung steht;
vi) Erstellen und/oder Anpassen eines Zeitablaufs (40) zur Be- und Entladung des ersten (15) und/oder zweiten elektrischen Energiespeichers (16) und/oder Anpassen des Zeitablaufs (41) zur Bearbeitung der Werkstücke (2) durch das zumindest eine Fügegerät (6a-c), sodass ein Anteil der durch die Energieerzeugungseinrichtung (3a, 3b) erzeugten elektrischen Energie (E) an dem für die Bearbeitung der Werkstücke durch das zumindest eine Fügegerät benötigten Energiebedarf (E_{B}) eingestellt, vorzugsweise maximiert, wird;
vii) Bearbeiten der Werkstücke (2) durch das zumindest eine Fügegerät (6a-c) und/oder Be- und Entladen des ersten (15) und/ oder zweiten elektrischen Energiespeichers (16) gemäß dem Zeitablauf (41), wobei das zumindest eine Fügegerät (6a-c) mit dem zweiten elektrischen Energiespeicher (16) verbunden ist.

7. Energieverteilungsverfahren nach Anspruch 6, **dadurch gekennzeichnet, dass** der erste (15) und zweite Energiespeicher (16) zumindest derart dimensioniert sind, dass im Falle einer elektrischen Unterversorgung durch das lokale Energieversorgungsnetz (4) eine Mindestenergiemenge an elektrischer Energie zur Verfügung gestellt wird, um einen bereits begonnenen Fügeprozess unterbrechungsfrei abzuschließen.

8. Energieverteilungsverfahren nach Anspruch 6 oder 7, **dadurch gekennzeichnet, dass** der Zeitablauf (41) zur Bearbeitung der Werkstücke derart erstellt oder angepasst wird, dass die Werkstücke (2) in einem Zeitabschnitt (Tₛₒₗₗ) des vorgegebenen Zeitraums (T) bearbeitet werden, in dem die Menge an elektrischer Energie (E), die durch die Energieerzeugungseinrichtung (3a, 3b) erzeugt wird und/oder durch die Energieerzeugungseinrichtung (3a, 3b) erzeugt worden ist und in dem zumindest einen ersten (15) und/oder zumindest einen zweiten elektrischen Energiespeicher (16) zur Verfügung steht, den Energiebedarf (E_{B}) der Produktionsanlage für die Bearbeitung der Werkstücke durch das zumindest eine Fügegerät (6a-c) deckt.

9. Energieverteilungsverfahren nach einem der Ansprüche 6 bis 8, **dadurch gekennzeichnet, dass** elektrische Überschussenergie, die von der Energieerzeugungseinrichtung (3a, 3b) zur Verfügung gestellt wird und die aktuell nicht zur Deckung des Energiebedarfs (E_{B}) der Produktionsanlage (5) benötigt wird, in dem zumindest einen ersten (15) und/oder zumindest einen zweiten elektrischen Energiespeicher (16) gespeichert wird und/oder gespeichert bleibt.

10. Energieverteilungsverfahren nach einem der Ansprüche 6 bis 9, **dadurch gekennzeichnet, dass** rekuperierte elektrische Energie (E_{R}), beispielsweise von einem Industrieroboter (100), in dem zumindest einen ersten (15) und/oder zumindest einen zweiten elektrischen Energiespeicher (16) gespeichert wird.

11. Energieverteilungsverfahren nach einem der Ansprüche 6 bis 10, **dadurch gekennzeichnet, dass** die Energieerzeugungseinrichtung (3a, 3b) eine Photovoltaikanlage (8b) ist, die zumindest teilweise auf einem Dach einer Produktionshalle für die Produktionsanlage (5) angeordnet ist.

12. Energieverteilungsverfahren nach einem der Ansprüche 6 bis 11, **dadurch gekennzeichnet, dass** bei der Bestimmung gemäß Schritt iii) Prognosedaten, beispielsweise Wetterdaten, herangezogen werden.

13. Energieverteilungsverfahren nach einem der Ansprüche 6 bis 12, **dadurch gekennzeichnet, dass** bei der Bestimmung gemäß Schritt iv) Prognosedaten, beispielsweise geplante Produktionsmengen, herangezogen werden.

14. Energieverteilungsverfahren nach einem der Ansprüche 6 bis 13, **dadurch gekennzeichnet, dass** das zumindest eine Fügegerät (6a-c) Daten über die momentan verbrauchte Energie an die Berechnungseinrichtung (37) sendet.
